# EUROPÄISCHE PATENTANMELDUNG

(11) **EP 3 178 721 A1**
(43) Veröffentlichungstag der Anmeldung: **14.06.2017**
(21) Anmeldenummer: 16190515.3
(22) Anmeldetag: 24.09.2016
(51) Int. Cl.: B62B 3/00, B62B 3/06, B62B 3/10

(54) **TISCHTRANSPORTVORRICHTUNG**

(30) Priorität: 11.12.2015 DE 202015008486 U
(71) Anmelder: Pernet, Thomas, 73079 Süßen (DE)
(72) Erfinder: Pernet, Thomas, 73079 Süßen (DE)
(74) Vertreter: Wimmer, Stephan

(57) **Zusammenfassung**

Eine Tischtransportvorrichtung (10) zum Transport eines Tisches (10) umfasst mehrere Rollen (34, 35) und ein Tischträgerelement (51) zum Unterfahren des zu transportierenden Tisches (10). Die Tischtransportvorrichtung (20) ist ausgebildet, um zum Unterfahren des zu transportierenden Tisches (10) mittels des Tischträgerelements (51) aus einer Standposition einseitig angehoben und nach vorne geneigt zu werden und beim Aufrichten unter dem zu transportierenden Tisch (10) den zu transportierenden Tisch (10) vom Fußboden (19) abzuheben.

## Beschreibung

In Gemeindehäusern, Veranstaltungshallen, Schulen, öffentlichen Gebäuden usw. müssen immer wieder Tische aufgestellt und/oder umgestellt werden. Meist wird dies von Hausmeisterinnen oder Hausmeistern durchgeführt, die alleine zu Werke gehen müssen. Da Tische schwer und unhandlich sind, wird ihr Transport durch eine einzelne Person auf Kosten der Gesundheit ausgetragen. Um dies zu vermeiden, wäre eine zweite Person erforderlich, die aber meist nicht zu Verfügung steht.

Sehr hilfreich ist eine Tischtransportvorrichtung, die eine zweite Person ersetzt. Herkömmliche Transportvorrichtungen um Tische durch Schieben oder Ziehen örtlich zu verändern sind umständlich zu bedienen und/oder kostenintensiv in der Herstellung. Beispiele sind in DE 1 936 824 U und DE 94 01 582 U1 beschrieben. Tische werden auch mit einer Vorrichtung bewegt, die den Tisch seitlich auf der längeren Seite unterfährt und mit einer Deichsel gezogen werden. Das hat den Nachteil, dass der Tisch seitlich gezogen nicht durch einen Türrahmen passt. In DE 195 42 788 A1 und EP 2 258 599 A2 sind fahrbare Vorrichtungen beschrieben, auf denen jeweils mehrere Tischplatten hochkant gelagert und transportiert werden können. In DE 202 11 053 U1 ist eine fahrbare Vorrichtung beschrieben, auf die vermutlich zwei Tischbeine eines Tisches gestellt werden können.

Eine Aufgabe der vorliegenden Erfindung besteht darin, eine verbesserte Tischtransportvorrichtung zum Transport eines Tisches zu schaffen, die es einem Benutzer insbesondere ermöglicht, Tische alleine, schnell und einfach von einem Ort zum anderen ohne großen Kraftaufwand, zusätzliches Heben und Halten zu bewegen, und zwar längs oder quer, sodass jederzeit auch Türen durchfahren werden können. Ein weiteres Ziel kann eine kostengünstige Herstellungsmethode sein.

Diese Aufgabe wird durch eine Vorrichtung gemäß dem unabhängigen Anspruch gelöst.

Weiterbildungen sind in den abhängigen Ansprüchen angegeben.

Ausführungsformen der vorliegenden Erfindung beruhen auf der Idee, eine Tischtransportvorrichtung zum Transport eines Tisches zu schaffen, die in einem geneigten Zustand den zu transportierenden Tisch - zumindest teilweise - unterfahren kann, und die dann unter dem Tisch mit geringem Kraftaufwand aufgerichtet werden kann, um dabei den Tisch anzuheben.

Eine Tischtransportvorrichtung umfasst um 360° schwenkbare Lenkrollen und einen Handgriff und ist zum Unterfahren eines einzelnen Tisches, um diesen ortsverändernd ohne großen Kraftaufwand zu bewegen, ausgebildet.

Eine Tischtransportvorrichtung umfasst mehrere Räder oder Rollen, die ein Bewegen der Tischtransportvorrichtung auf einem Fußboden rollend ermöglichen, und ist derart ausgebildet, dass ein zu transportierender Tisch von der Tischtransportvorrichtung unterfahren und von dem Fußboden ohne großen Kraftaufwand angehoben werden kann, um anschließend die Tischtransportvorrichtung und den zu transportierenden Tisch mittels der - insbesondere schwenkbaren - Räder oder Rollen zu bewegen, so dass auch Türrahmen durchfahren werden können.

Eine Tischtransportvorrichtung zum Transport eines Tisches mit einer Tischplatte umfasst mehrere Räder oder Rollen, die ein Bewegen der Tischtransportvorrichtung auf einem Fußboden rollend ermöglichen, und ein Tischträgerelement oder einen anderen Tischplattenträger zum Tragen der Unterseite einer Tischplatte und weist in einer geneigten Position eine geringere Höhe des Tischträgerelements oder des anderen Tischplattenträgers über dem Fußboden auf als in einer aufgerichteten oder Standposition, so dass die Tischtransportvorrichtung in der geneigten Position die Tischplatte des zu transportierenden Tisch unterfahren und beim Aufrichten der Tischtransportvorrichtung den Tisch anheben kann und in der Standposition die Unterseite der Tischplatte auf dem Tischträgerelement oder dem anderen Tischplattenträger ruht.

Eine Tischtransportvorrichtung zum Transport eines Tisches umfasst ein Grundelement, zwei Räder an einer Vorderseite des Grundelements und ein Rad an einer Rückseite des Grundelements, die ein Bewegen der Tischtransportvorrichtung auf einem Fußboden rollend ermöglichen, eine Trägerstütze auf dem Grundelement und ein Tischträgerelement als Auflage für den zu transportierenden Tisch auf der Trägerstütze, wobei die Tischtransportvorrichtung eine Höhe des Tischträgerelements über dem Fußboden aufweist, die größer als die Höhe der Unterseite der Tischplatte des zu transportierenden Tisches über dem Fußboden ist, so dass ein Unterfahren des Tisches in einer Standposition der Tischtransportvorrichtung nicht möglich ist, weil die Tischtransportvorrichtung an dem Tisch anstoßen würde, wobei die Tischtransportvorrichtung aus ihrer Standposition so weit neigbar ist, dass der zu transportierende Tisch durch die geneigte Tischtransportvorrichtung unterfahren werden kann.

Insbesondere ist mindestens eines der Räder eine Lenkrolle, deren horizontale Achse um eine vertikale Schwenkachse schwenkbar ist. Wenn alle gleichzeitig auf einem ebenen Fußboden aufliegenden Räder Lenkrollen sind, kann die Tischtransportvorrichtung in alle Richtungen bewegt werden.

Die Tischtransportvorrichtung ist insbesondere zu ihrer Vorderseite hin derart neigbar, dass ein zu transportierender Tisch unterfahren werden kann.

Eine Tischtransportvorrichtung zum Transport eines Tisches umfasst mehrere Rollen und ein Tischträgerelement zum Unterfahren des zu transportierenden Tisches, wobei die Tischtransportvorrichtung ausgebildet ist, um zum Unterfahren des zu transportierenden Tisches mittels des Tischträgerelements aus einer Standposition einseitig angehoben und nach vorne geneigt zu werden und beim Aufrichten unter dem Tisch den zu transportierenden Tisch vom Fußboden abzuheben.

Alternativ kann die Tischtransportvorrichtung vorgesehen und ausgebildet sein, um nach hinten, d. h. von dem zu transportierenden Tisch weg und zu dem Benutzer hin geneigt zu werden.

Bei einer Tischtransportvorrichtung, wie sie hier beschrieben ist, ist insbesondere eine der Rollen eine Lenkrolle.

Es können mehrere oder alle Rollen Lenkrollen sein.

Eine Tischtransportvorrichtung, wie sie hier beschrieben ist, umfasst insbesondere ferner einen Handgriff.

Der Handgriff kann an einem Steuerholm angeordnet sein, insbesondere an dessen oberem Ende, oder Teil eines Steuerholms sein oder durch einen Bereich eines Steuerholms gebildet sein. Der Handgriff kann zum Führen, insbesondere Schieben oder Ziehen oder Steuern der Tischtransportvorrichtung vorgesehen und ausbildet sein. Ferner kann die Tischtransportvorrichtung mittels des Handgriffs von ihrer Standposition in ihre geneigte Position und umgekehrt bewegt werden.

Bei einer Tischtransportvorrichtung, wie sie hier beschrieben ist, ist der Handgriff insbesondere zumindest entweder schwenkbar oder klappbar oder ausfahrbar ausgebildet oder so angeordnet, dass er beim Transport eines Tisches über der Tischplatte des Tisches angeordnet ist.

Eine Tischtransportvorrichtung, wie er hier beschrieben ist, weist insbesondere fernern eine gekrümmten Steuerholm, an dem der Handgriff angeordnet ist, auf.

Der gekrümmte Steuerholm kann abschnittsweise oder über seine gesamte Länge gekrümmt sein. Der Steuerholm kann zumindest abschnittsweise kreisbogenförmig oder näherungsweise kreisbogenförmig gekrümmt sein. Der Krümmungsmittelpunkt eines kreisbogenförmigen oder näherungsweise kreisbogenförmigen Abschnitts des Steuerholms liegt insbesondere in oder nahe dem Punkt des Tischträgerelements oder auf oder nahe der Verbindungsgeraden durch diejenigen Punkte des Tischträgerelements oder der Tischträgerelemente, der bzw. die beim Aufrichten der Tischträgervorrichtung unter einer Tischplatte die Tischplatte zunächst berühren.

Eine Tischtransportvorrichtung, wie er hier beschrieben ist, weist insbesondere keinen Handgriff auf.

Die Tischtransportvorrichtung ist in diesem Fall insbesondere so ausgebildet, dass sie allein mit einem Fuß geneigt und aufgerichtet werden kann. Beispielsweise weist die Tischtransportvorrichtung ein erstes Trittelement (oder Pedal) auf, das so angeordnet ist, dass die Tischtransportvorrichtung durch Ausübung einer Kraft auf das erste Trittelement geneigt werden kann. Alternativ oder zusätzlich kann die Tischtransportvorrichtung ein zweites Trittelement (oder Pedal) aufweisen, das so angeordnet ist, dass die Tischtransportvorrichtung durch Ausübung einer Kraft auf das zweite Trittelement aufgerichtet werden kann.

Eine Tischtransportvorrichtung, wie sie hier beschrieben ist, ist insbesondere so ausgebildet, dass durch das Neigen der Tischtransportvorrichtung der Schwerpunkt der Tischtransportvorrichtung über die Lenkrollen hinaus verlagert und unter dem Tisch beim Aufrichten wieder zurück verlagert und dabei der Schwerpunkt der Tischtransportvorrichtung und der Schwerpunkt des Tisches zusammen in die Fläche, die die Rollen miteinander definieren, verlagert werden.

Die Rollen definieren die Eckpunkte eines Polygons, das von dem Lot durch den Schwerpunkt der Tischtransportvorrichtung in der Standposition geschnitten und in der geneigten Position der Tischtransportvorrichtung nicht geschnitten wird.

Eine Tischtransportvorrichtung, wie sie hier beschrieben ist, ist insbesondere ausgebildet, um beim Aufrichten der Tischtransportvorrichtung einen Aufstelleffekt, der die Tischtransportvorrichtung zusammen mit dem zu transportierenden Tische - vor allem ohne großen Kraftaufwand - in die Standposition zurück versetzt, zu erzeugen.

Die Gesamthöhe einer Tischtransportvorrichtung, wie sie hier beschrieben, von einem Fußboden bis zu einer Oberkante des Tischträgerelements ist insbesondere in ihrer Standposition größer als die Höhe des Tisches vom Fußboden bis zu der Tischplattenunterkante.

Die Tischtransportvorrichtung ist insbesondere für einen Standardtisch oder einen Tisch mit Standardabmessungen (in Europa oft: Gesamthöhe zwischen 70 cm und 80 cm und Gesamtbreite zwischen 70 cm und 90 cm) vorgesehen und ausgebildet. Derartige Standardtische werden beispielsweise in Besprechungs-, Konferenz- und Tagungsräumen regelmäßig verwendet.

Bei einer Tischtransportvorrichtung, wie sie hier beschrieben ist, wird der Tisch insbesondere mittels einer Reibungskraft in die Waagerechte gedreht.

Bei einer Tischtransportvorrichtung, wie sie hier beschrieben ist, ist das Tischträgerelement insbesondere so vorgesehen und ausgebildet, dass der Tisch auf dem Tischträgerelement im Gleichgewicht liegt.

Eine Tischtransportvorrichtung, wie sie hier beschrieben ist, weist insbesondere mindestens drei Lenkrollen auf.

Eine Tischtransportvorrichtung, wie sie hier beschrieben ist, weist insbesondere mehrere Tischträgerelemente auf.

Bei einer Tischtransportvorrichtung, wie sie hier beschrieben ist, kann das Tischträgerelement insbesondere aus einem rutschsicheren Material bestehen oder ein rutschsicheres Material aufweisen oder ein rutschsicheres Material auf dem Tischträgerelement angeordnet sein.

Das rutschsichere Material umfasst insbesondere Gummi.

Eine Tischtransportvorrichtung, wie sie hier beschrieben ist, umfasst insbesondere ferner ein Begrenzungselement oder einen Anschlag.

Das Begrenzungselement oder der Anschlag ist insbesondere vorgesehen und ausgebildet, um beim Unterfahren eines Tisches mit der Tischtransportvorrichtung formschlüssig eine korrekte Positionierung der Tischtransportvorrichtung zu gewährleisten. Das Begrenzungselement oder der Anschlag ist also insbesondere so angeordnet, dass ein zu transportierender Tisch nach dem Aufrichten der Tischtransportvorrichtung - zumindest in Richtung des Unterfahrens - richtig auf der Tischtransportvorrichtung positioniert ist, wenn vor dem Aufrichten der Tischtransportvorrichtung der Tisch mit der Tischtransportvorrichtung so weit unterfahren wurde, dass der Anschlag oder das Begrenzungselement am Rand der Tischplatte anlag.

Bei einer Tischtransportvorrichtung, wie sie hier beschrieben ist, ist insbesondere das Begrenzungselement an dem Handgriff vorgesehen oder der Handgriff zugleich auch als Begrenzungselement vorgesehen.

Eine Tischtransportvorrichtung, wie sie hier beschrieben ist, umfasst insbesondere ferner ein Trittelement.

Das Trittelement ist insbesondere als Platte ausgebildet. Das Trittelement ist insbesondere dafür vorgesehen und ausgebildet, einen Fuß eines Benutzers und die von dem Fuß ausgeübte Kraft aufzunehmen, um das Aufrichten der Tischtransportvorrichtung aus einer geneigten Position in ihre Standposition nach dem Unterfahren eines zu transportierenden Tisches zu unterstützen.

Eine Tischtransportvorrichtung, wie sie hier beschrieben ist, umfasst insbesondere ferner eine Stützrolle.

Die Stützrolle ist insbesondere angeordnet und ausgebildet, um die Tischtransportvorrichtung in einer geneigten Position, die zum Unterfahren des zu transportierenden Tisches geeignet ist, zu stützen.

Die Höhe einer Tischtransportvorrichtung, wie sie hier beschrieben ist, vom Fußboden bis zu der Oberkante des Tischträgerelements ist insbesondere veränderbar.

Bei einer Tischtransportvorrichtung, wie sie hier beschrieben ist, ist der Handgriff insbesondere so angeordnet, dass die Tischtransportvorrichtung zum Unterfahren des Tisches nach hinten, zum Körper des Benutzers geneigt werden muss.

Eine Tischtransportvorrichtung, wie sie hier beschrieben ist, umfasst insbesondere ferner ein Ablageelement.

Eine Tischtransportvorrichtung, wie sie hier beschrieben ist, umfasst insbesondere ferner ein Ablageelement an dem Tischträgerelement.

Das Ablageelement ist dafür vorgesehen und ausgebildet, Gegenstände auf dem Ablageelement abzulegen, zu lagern und zu transportieren, beispielsweise Geschirr, Besteck oder Speisen in einem Restaurant oder Reinigungsutensilien oder Wäsche im Zimmerservice eines Hotels. Dazu weist das Ablageelement insbesondere eine ebene und zu einem Fußboden, auf dem die Tischtransportvorrichtung in ihrer Standposition steht, parallele Ablagefläche auf. Das Ablageelement kann starr mit der Tischtransportvorrichtung verbunden oder zerstörungsfrei von der Tischtransportvorrichtung trennbar sein.

Eine Tischtransportvorrichtung, wie sie hier beschrieben ist, umfasst insbesondere ferner eine Trägerstütze.

Die Trägerstütze verbindet insbesondere das Grundelement oder den Grundträger oder ein anderes Bauteil oder einen anderen Bereich der Tischtransportvorrichtung, an der die Räder oder Rollen befestigt sind, mit dem Tischträgerelement oder den Tischträgerelementen.

Bei einer Tischtransportvorrichtung, wie sie hier beschrieben ist, weist die Tischtransportvorrichtung insbesondere einen U-förmigen Grundriss mit einer Ausnehmung zum Aufnehmen eines Stempelfußes eines zu transportierenden Tisches auf.

In der Standposition der Tischtransportvorrichtung kann der Stempelfuß eines auf der Tischtransportvorrichtung ruhenden Tisches in der Ausnehmung angeordnet und von der Tischtransportvorrichtung U-förmig umgriffen werden.

Eine Tischtransportvorrichtung, wie sie hier beschrieben ist, umfasst insbesondere ferner eine Stempelfußstütze zum seitlichen Stützen eines Stempelfußes eines zu transportierenden Tisches.

Die Stempelfußstütze kann ein Anliegen eines Stempelfußes an anderen Teilen oder Oberflächenbereichen der Tischtransportvorrichtung verhindern und/oder eine definierte Positionierung des Stempelfußes an der Tischtransportvorrichtung unterstützen.

Bei einer Tischtransportvorrichtung, wie sie hier beschrieben ist, ist insbesondere der Abstand zweier Tischträgerelemente veränderbar.

Insbesondere sind ein oder zwei Tischträgerelemente unbewegbar an der Tischtransportvorrichtung befestigt und ein oder zwei Tischträgerelemente relativ zu der Tischtransportvorrichtung zwischen zwei vorbestimmten Endpositionen bewegbar. Beispielsweise sind vier Tischträgerelemente an den Ecken eines Rechtecks mit veränderbarer Breite angeordnet. Der Abstand kann veränderbar sein, indem ein schwenkbarer Hebel, an dessen bewegbaren Ende ein oder mehrere Tischträgerelemente angeordnet sind, zwischen zwei vorbestimmten Endpositionen bewegbar ist. Endpositionen werden insbesondere durch mechanische Anschläge definiert. Die Veränderung des Abstands kann beispielsweise mittels einer Feder unterstützt werden und/oder motorisch und/oder manuell möglich sein. Die Veränderung des Abstands kann insbesondere mittels eines manuell bewegbaren Griffs oder Hebels und eines Bowdenzugs erfolgen.

Eine Veränderung des Abstands zweier Tischträgerelemente kann eine Anpassung der Tischtransportvorrichtung an verschiedene Tische ermöglichen. Ferner kann eine Veränderung des Abstands das Aufrichten der Tischtransportvorrichtung und das damit verbundene Anheben eines zuvor unterfahrenen und zu transportierenden Tisches vereinfachen. Beispielsweise ist der Abstand während des Unterfahrens gering und wird dann erst nach dem vollständigen Aufrichten der Tischtransportvorrichtung in ihre Standposition vergrößert, um eine stabile Lage des zu transportierenden Tisches auf der Tischtransportvorrichtung zu gewährleisten.

Eine Tischtransportvorrichtung besteht aus einem Grundelement, an dem mindestens zwei Lenkrollen vorne und mindestens eine Lenkrolle hinten angeordnet sind. Sie dienen dazu, die Tischtransportvorrichtung auf Rollen zu bewegen. Auf diesem Grundelement ist mindestens eine Trägerstütze angebracht, auf der ein Tischträgerelement angeordnet ist. Die Tischtransportvorrichtung weist eine bestimmte Höhe vom Fußboden bis Oberkante Tischträgerelement auf. Diese bestimmte Höhe überragt die Höhe zwischen Fußboden und Unterkante der Tischplatte des zu transportierenden Tisches. Da die Höhe der Tischtransportvorrichtung die Höhe des Tisches überragt, kann ein Unterfahren des Tisches in der Standposition des Tischtransportvorrichtung nicht erfolgen, weil diese an dem Tisch anstoßen würde.

Infolgedessen muss die Tischtransportvorrichtung aus einer Standposition einseitig angehoben und nach vorne, vom Körper des Benutzers weg, geneigt werden, bis die Tischtransportvorrichtung mit ihrem Tischträgerelement den Tisch, insbesondere in der Mitte seiner längeren Seite, vollständig unterfahren kann.

Beim Neigen der Tischtransportvorrichtung wird der Schwerpunkt der Tischtransportvorrichtung über den Drehpunkt der Lenkrollen aus dem Zentrum hinaus verlagert und unter dem Tisch durch Aufrichten wieder hinein verlagert. Beim Aufrichten der Tischtransportvorrichtung werden der Schwerpunkt der Tischtransportvorrichtung und der Schwerpunkt des Tisches zusammen in die Fläche, die die Lenkrollen vorne und die Lenkrollen hinten miteinander bilden und begrenzen, hinein verlegt. Ab einem bestimmten Neigungswinkel tritt ein Aufstelleffekt ein, der die Tischtransportvorrichtung mit dem Tisch ohne großen Kraftaufwand wieder in die Standposition zurück kippen lässt. Synchron wird der Tisch, anfangs erst einseitig, mit einer Schräglage vom Fußboden abgehoben. Das Tischträgerelement greift beim Aufrichten an der Unterseite der Tischplatte an, und der Tisch dreht sich letztlich waagrecht auf das Tischträgerelement.

Die Reibungskraft bei der Drehbewegung ist größer als die schräge Abwärtskraft des Tisches, deshalb gleitet der Tisch nicht schräg nach unten ab, sondern dreht sich oder kippt auf das Tischträgerelement und wird von dem Tischträgerelement letztlich im Gleichgewicht getragen. Der Tisch liegt dann, mit einem Abstand zwischen Fußboden und Tischfüßen, auf dem Tischträgerelement auf. Das Tischträgerelement dient beim Anheben als Drehpunkt und anschließend, bei Parallelität zwischen Tischträgerelement und Tisch zueinander, als Auflage.

Das Tischträgerelement kann so ausgebildet sein, dass es mindestens einen Auflagepunkt für die Unterseite der Tischplatte aufweist. Das Tischträgerelement kann aus einem rutschsicheren Material bestehen und/oder mit einem rutschsicheren Material beschichtet oder überzogen sein, insbesondere Gummi. Das Tischträgerelement kann auch mit mindestens einem rutschsicheren Auflageelement ausgebildet sein. Die Tischtransportvorrichtung kann auch mehrere Tischträgerelemente aufweisen um die Last des Tisches auf mehrere Auflagepunkte zu verteilen.

Um die Tischtransportvorrichtung neigen zu können, ist diese insbesondere mit einem Handgriff ausgebildet. Dieser Handgriff kann auch klappbar und/oder ausziehbar angeordnet sein, damit der Handgriff weggeschwenkt und/oder eingeschoben werden kann um die Tischtransportvorrichtung platzsparend abzustellen. Durch diesen Handgriff wird die Tischtransportvorrichtung angehoben und nach vorne geneigt.

Der Handgriff könnte auch auf der Seite angebracht sein, auf der die Lenkrollen angeordnet sind, nämlich dem abgebildeten Handgriff auf der Zeichnung gegenüber, dabei wäre die Neigungsrichtung zum Unterfahren des Tisches nicht mehr nach vorne sondern in dem Fall nach hinten zum Körper des Benutzers.

Die Tischtransportvorrichtung kann am Grundelement mit einer Trittfläche, insbesondere einer Platte, ausgebildet sein, auf die man einen Fuß oder einen Teilbereich eines Fußes setzten kann, um die Aufrichtbewegung der Tischtransportvorrichtung unter dem Tisch mit der Kraft des Fußes zu unterstützen.

Beim Neigen der Tischtransportvorrichtung muss diese vom Benutzer am Handgriff bei einem ausreichenden Neigungswinkel gehalten werden, damit diese nicht auf den Fußboden fällt. Um dies zu erleichtern, ist auf einer bestimmten Höhe über dem Grundelement eine Stützrolle angeordnet, die den Neigungswinkel begrenzt. Diese Stützrolle sitzt ab einem bestimmten Neigungswinkel auf dem Fußboden auf und stützt die Tischtransportvorrichtung ab. Der Benutzers kann die Tischtransportvorrichtung mit dem Handgriff neigen und auf dieser Stützrolle ablegen und muss deshalb das Gewicht beim Unterfahren des Tisches nicht halten. Die Stützrolle ist so angeordnet, dass beim Unterfahren des Tisches die Stützrolle und die Lenkrollen zusammen im Eingriff sind. Die Lenkrollen haben somit eine doppelte Funktion.

Damit der Schwerpunkt des Tisches beim Unterfahren nicht Überfahren wird, kann die Tischtransportvorrichtung ein Begrenzungselement aufweisen, welches an dem Tisch beim Unterfahren nach einer bestimmten Wegstrecke andockt und dadurch die Wegstrecke begrenzt. Es ist aber auch möglich, dass der Handgriff so ausgebildet und angeordnet ist, dass dieser nicht nur als Handgriff sondern zusätzlich auch als Begrenzungselement dient. Wenn der Tisch angehoben ist und auf dem Tischträgerelement aufliegt, kann dieser direkt am Handgriff bewegt werden oder man greift den Tisch direkt um ihn zu bewegen. Weil auf dem Markt mit unterschiedlichen Tischen gehandelt wird, kann die Tischtransportvorrichtung eine Trägerstütze und/oder ein Tischträgerelement aufweisen, das in der Höhe veränderbar ist, um niedrigere bzw. höhere Tische anheben zu können. Um die Tischtransportvorrichtung auch als Transportwagen für andere Artikel wie z. B. Bücher, Kerzen, Gläser und vieles mehr benützen zu können, kann ein Ablageelement, z. B. ein Korb, eine Wanne, eine Kiste, ein Behälter, oder eine Platte, insbesondere ein Brett, auf dem Tischträgerelement angeordnet sein, das einfach schnell angebracht und wieder abgenommen werden kann. Dieses Ablageelement kann zusätzlich an der Tischtransportvorrichtung arretierbar sein, damit es beim Fahren nicht verrutscht oder beim Beladen ins Kippen kommt.

Eine Tischtransportvorrichtung, wie sie hier beschrieben ist, ist insbesondere für den Transport eines Tisches einer vorbestimmten Bauart oder eines vorbestimmten Typs und/oder für den Transport eines Tisches mit einer vorbestimmten Höhe der Unterseite der Tischplatte oder mit einer Höhe der Unterseite der Tischplatte in einem vorbestimmten Bereich vorgesehen und ausgebildet.

Eine Tischtransportvorrichtung, wie sie hier beschrieben ist, ist insbesondere für den Transport eines Tisches mit einer Höhe der Oberseite der Tischplatte über dem Fußboden im Bereich von 72 cm bis 80 cm oder im Bereich von 73 cm bis 79 cm oder im Bereich von 75 cm bis 77 cm und mit einer Höhe der Unterseite der Tischplatte über dem Fußboden im Bereich von 69 cm bis 75 cm oder im Bereich von 71 cm bis 73 cm ausgebildet. Dazu ist die Höhe des Tischträgerelements oder Tischplattenträgers der Tischtransportvorrichtung über dem Fußboden, auf dem die Tischtransportvorrichtung steht, insbesondere in der geneigten (insbesondere durch das Stützrad oder die Stützrolle definierten) Position kleiner als 65 cm oder kleiner als 69 cm oder kleiner als 71 cm und in der Standposition bzw. aufgerichteten Position, die zum Transport des Tisches vorgesehen ist, größer als 77 cm oder größer als 75 cm oder größer als 73 cm.

Alternativ ist eine Tischtransportvorrichtung, wie sie hier beschrieben ist, beispielsweise für den Transport eines Tisches mit einer Höhe der Oberseite der Tischplatte über dem Fußboden im Bereich von 90 cm bis 130 cm oder im Bereich von 100 cm bis 120 cm oder im Bereich von 105 cm bis 115 cm und mit einer Höhe der Unterseite der Tischplatte über dem Fußboden im Bereich von 85 cm bis 128 cm oder im Bereich von 95 cm bis 118 cm oder im Bereich von 100 cm bis 113 cm ausgebildet. Dazu ist die Höhe des Tischträgerelements oder Tischplattenträgers der Tischtransportvorrichtung über dem Fußboden, auf dem die Tischtransportvorrichtung steht, insbesondere in der geneigten (insbesondere durch das Stützrad oder die Stützrolle definierte) Position kleiner als 85 cm oder kleiner als 95 cm oder kleiner als 100 cm und in der Standposition bzw. aufgerichteten Position, die zum Transport des Tisches vorgesehen ist, größer als 128 cm oder größer als 118 cm oder größer als 113 cm.

Alle Höhen sind auch im Weiteren immer auf einen ebenen Fußboden bezogen, auf dem die Tischtransportvorrichtung und/oder ein mittels der Tischtransportvorrichtung zu transportierender Tisch in vorgesehenen Weise, d. h. in einer Weise, die für den vorgesehenen Gebrauch geeignet ist, stehen.

Die Vorderseite der Tischtransportvorrichtung ist diejenige Seite der Tischtransportvorrichtung, die unmittelbar vor dem Unterfahren eines zu transportierenden Tisches dem Tisch zugewandt ist, und in deren Richtung die Tischtransportvorrichtung beim Unterfahren eines zu transportierenden Tisches bewegt wird.

Nachfolgend werden Ausführungsbeispiele anhand der beigefügten Figuren näher erläutert. Es zeigen:
- Figur 1: eine schematische Darstellung eines Tisches und einer Tischtransportvorrichtung;
- Figur 2: eine weitere schematische Darstellung des Tisches und der Tischtransportvorrichtung aus Figur 1;
- Figur 3: eine weitere schematische Darstellung des Tisches und der Tischtransportvorrichtung aus den Figur 1 und 2;
- Figur 4: eine schematische axonometrische Darstellung einer weiteren Tischtransportvorrichtung;
- Figur 5: eine schematische axonometrische Darstellung eines Teils einer weiteren Tischtransportvorrichtung;
- Figur 6: eine schematische axonometrische Darstellung einer weiteren Tischtransportvorrichtung;
- Figur 7: eine schematische Darstellung einer weiteren Tischtransportvorrichtung;
- Figur 8: eine schematische Darstellung einer Untersicht eines Ablageelements der Tischtransportvorrichtung aus Figur 7;
- Figur 9: eine schematische Darstellung einer Untersicht eines weiteren Ablageelements;
- Figur 10: eine weitere schematische Darstellung der Untersicht des Ablageelements aus Figur 9;
- Figur 11: eine schematische axonometrische Darstellung einer weiteren Tischtransportvorrichtung;
- Figur 12: eine schematische Darstellung eines Tisches und einer weiteren Tischtransportvorrichtung;
- Figur 13: eine weitere schematische Darstellung des Tisches und der Tischtransportvorrichtung aus Figur 12;
- Figur 14: eine weitere schematische Darstellung des Tisches und der Tischtransportvorrichtung aus den Figur 12 und 13.

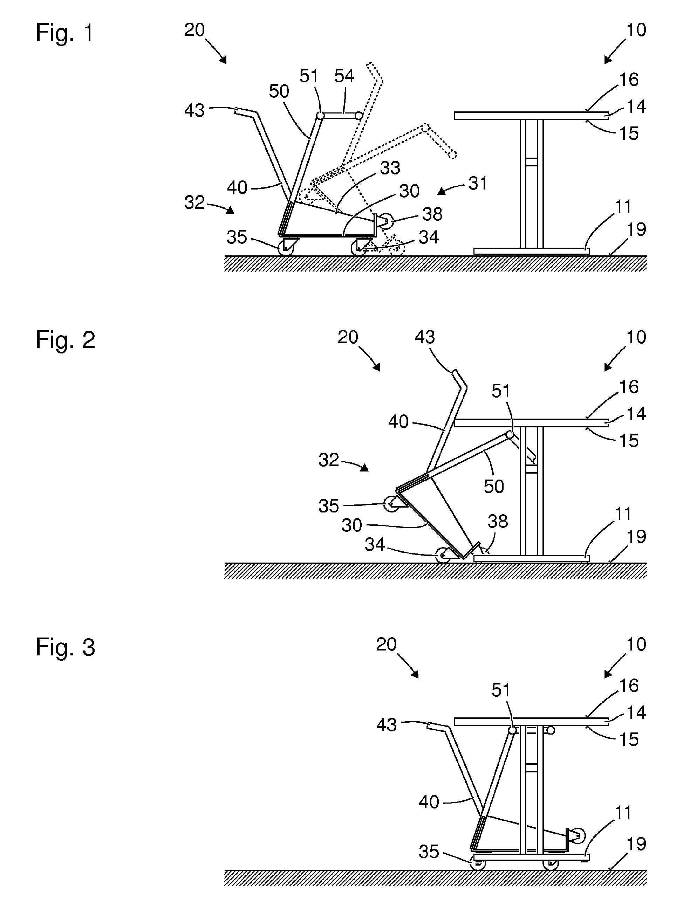

Figur 1 zeigt eine schematische Darstellung eines Tisches 10 mit mehreren Tischbeinen 11 und einer ebenen Tischplatte 14, die von den Tischbeinen getragen wird. Die Tischplatte 14 weist eine Unterseite 15 und eine Oberseite 16 auf. Die Tischbeine 11 sind bei dem dargestellten Beispiel jeweils im Wesentlichen T-förmig und an die Tischplatte 14 anklappbar, wie dies beispielsweise bei Tischen für Besprechungs-, Konferenz- und Tagungsräume regelmäßig der Fall ist. Die von der Tischplatte 14 abgewandten, unteren Enden der Tischbeine 11 des Tisches 10 ruhen auf einem ebenen Fußboden 19. Die Zeichenebene der Figur 1 ist orthogonal zu der Tischplatte 14 und dem Fußboden 19.

In Figur 1 ist ferner eine Tischtransportvorrichtung 20 dargestellt, die zum Transport des Tisches 10 vorgesehen und ausgebildet ist. In Figur 1 ist die Tischtransportvorrichtung 20 zweimal neben dem Tisch 10 angeordnet dargestellt, einmal in durchgezogenen Linien und einmal in gestrichelten Linien. In durchgezogenen Linien ist die Tischtransportvorrichtung 20 in einer Standposition dargestellt, auf die nachfolgend zunächst Bezug genommen wird. In gestrichelten Linien ist die Tischtransportvorrichtung 20 in einer geneigten Position dargestellt, die dazu geeignet ist, den Tisch 10 zu unterfahren.

Die Tischtransportvorrichtung 20 weist einen Grundträger oder ein Grundelement 30 auf. Als Vorderseite 31 des Grundträgers 30 und der Tischtransportvorrichtung 20 wird die dem Tisch zugewandte, in Figur 1 rechts dargestellte Seite bezeichnet. Als Rückseite 32 des Grundträgers 30 und der Tischtransportvorrichtung 20 wird die von dem Tisch abgewandte, in Figur 1 links dargestellte Seite bezeichnet.

Der Grundträger 30 ist bei dem in Figur 1 dargestellten Beispiel aus einem Blechstück, das nahe der Vorderseite 31 und nahe der Rückseite 32 jeweils einmal abgekantet ist, gebildet. Der Grundträger 30 weist in einem Schnitt entlang einer Ebene parallel zu der Zeichenebene der Figur 1 einen eckig U-förmigen Längsschnitt auf. Der Grundträger 30 ist durch ein Versteifungsblech 33 parallel zu der Zeichenebene der Figur 1 ausgesteift.

An dem Grundträger 30, insbesondere an dessen Unterseite, sind nahe der Vorderseite 31 zwei Lenkrollen 34 und nahe der Rückseite 32 zwei weitere Lenkrollen 35 vorgesehen, von denen in Figur 1 jeweils nur eine dargestellt ist. Die Tischtransportvorrichtung 20 kann mit den Lenkrollen 34, 35 auf dem Fußboden rollend mit geringem Kraft- und Energieaufwand parallel zu dem Fußboden bewegt werden.

An der Vorderseite 31 des Grundträgers 30 ist ferner eine Stützrolle 38 vorgesehen, die in der in Figur 1 in durchgezogenen Linien dargestellten Standposition der Tischtransportvorrichtung keinen Kontakt zu dem Fußboden 19 hat.

An dem Grundträger 30 ist das untere Ende eines Steuerholms 40 befestigt. Das obere Ende des Steuerholms 40 ist als Handgriff 43 ausgebildet. Der Handgriff 43 ist gegenüber dem Rest des Steuerholms 40 geknickt. Der Steuerholm 40 und der Handgriff 43 sind dafür vorgesehen und insbesondere ausreichend robust ausgebildet und mit dem Grundträger 30 verbunden, dass die Tischtransportvorrichtung 20 bewegt werden kann, indem ein Benutzer mit einer Hand oder mit beiden Händen Kräfte und Momente auf den Handgriff ausübt.

An dem Grundträger 30 ist ferner das untere Ende einer Trägerstütze 50 befestigt, die bei dem dargestellten Beispiel leicht geneigt ist. An dem oberen Ende der Trägerstütze 50 sind mehrere Tischträgerelemente 51 vorgesehen. Bei dem dargestellten Beispiel sind die Tischträgerelemente 51 an den Enden einer H-förmigen Tragstruktur 54 angeordnet. Die H-förmige Tragstruktur ist parallel zu dem Fußboden 19 angeordnet. Die parallelen (den vertikalen Strichen des Buchstabens 'H' entsprechenden) Schenkel sind orthogonal zu der Zeichenebene der Figur 1 angeordnet. Der (dem horizontalen Strich des Buchstabens 'H' entsprechende) Verbindungsschenkel ist parallel zu der Zeichenebene der Figur 1 angeordnet.

Die Tischträgerelemente 51 sind beispielsweise durch je einen Abschnitt eines Schlauches oder Rohrs oder durch je eine becherförmige Struktur gebildet, die über die Enden der H-förmigen Tragstruktur 54 gestülpt sind. Die Tischträgerelemente 51 sind aus Gummi oder einem anderen rutschsicheren Material gebildet, das mit den üblichen Oberflächen an der Unterseite 15 eines Tisches 10 eine hohe Haftreibung aufweist.

In der in Figur 1 in durchgezogenen Linien dargestellten Standposition der Tischtransportvorrichtung 20 ist die Höhe der Tischträgerelemente 51 über dem Fußboden 19, auf dem die Tischtransportvorrichtung 20 steht, größer als die Höhe der Unterseite 15 der Tischplatte 14 über dem Fußboden 19.

In der in Figur 1 in gestichelten Linien dargestellten geneigten Position der Tischtransportvorrichtung 20 steht oder rollt die Tischtransportvorrichtung - insbesondere in einem stabilen Gleichgewicht - auf den Lenkrollen 34 an der Vorderseite 31 des Grundträgers 30 und auf der Stützrolle 38. Die Lenkrollen 35 an der Rückseite des Grundträgers 30 haben keinen Kontakt zu dem Fußboden 19.

Figur 2 zeigt eine weitere schematische Darstellung des Tisches 10 und der Tischtransportvorrichtung 20 aus Figur 1. Die Art der Darstellung in Figur 2, insbesondere die Zeichenebene der Figur 2, entspricht derjenigen der Figur 1.

In Figur 2 ist eine Situation oder Konfiguration gezeigt, die sich von der anhand der Figur 1 dargestellten Situation unterscheidet. Die Tischtransportvorrichtung 20 befindet sich in ihrer in Figur 1 in gestrichelten Linien angedeuteten geneigten Position. Zusätzlich ist die Tischtransportvorrichtung 20 bei der in Figur 2 dargestellten Situation zu dem Tisch 10 hin bewegt. Dabei unterfährt die H-förmige Tragstruktur 54 an dem oberen Ende der Trägerstütze 50 mit den Tischträgerelementen 51 die Tischplatte 14 des Tisches 10.

Die in Figur 2 gezeigte Situation ist dadurch gekennzeichnet, dass der Steuerholm 40 der Tischtransportvorrichtung 20 an dem Rand der Tischlatte 14 anliegt. Der Steuerholm 40 dient somit gleichzeitig als Anschlag oder Begrenzungselement, das formschlüssig eine vorbestimmte Position der Tischtransportvorrichtung 20 unter dem Tisch definiert. Bei dieser durch Berührung zwischen dem Steuerholm 40 und dem Rand der Tischplatte 14 definierten, in Figur 2 gezeigten Position sind die Tischträgerelemente 51 an der H-förmigen Tragstruktur 54 an dem oberen Ende der Trägerstütze 50 bereits nahe der Mitte der Tischplatte 14 angeordnet.

Figur 3 zeigt eine weitere schematische Darstellung des Tisches 10 und der Tischtransportvorrichtung 20 aus den Figuren 1 und 2. Die Art der Darstellung in Figur 3, insbesondere die Zeichenebene der Figur 3, entspricht derjenigen der Figuren 1 und 2.

In Figur 3 ist eine weitere Situation oder Konfiguration gezeigt, die sich von den anhand der Figuren 1 und 2 dargestellten Situationen unterscheidet. Die in Figur 3 gezeigte Situation entsteht, indem ausgehend von der anhand der Figur 2 dargestellten Situation die Tischtransportvorrichtung 20 unter dem Tisch 10 wieder aufgerichtet wird, und zwar bis zu der bereits in Figur 1 in durchgezogenen Linien dargestellten Standposition. Da - wie bereits erwähnt - die Höhe der Tischträgerelemente 51 über dem Fußboden 19, auf dem die Tischtransportvorrichtung 20 steht, größer als die Höhe der Unterseite 15 der Tischplatte 14 über dem Fußboden 19 ist, ruht die Unterseite 15 der Tischplatte 14 auf den Tischträgerelementen 51, und die Tischbeine 11 des Tisches 10 berühren nicht mehr den Fußboden 19. Der Tisch 10 kann deshalb zusammen mit der Tischtransportvorrichtung 20 bewegt werden.

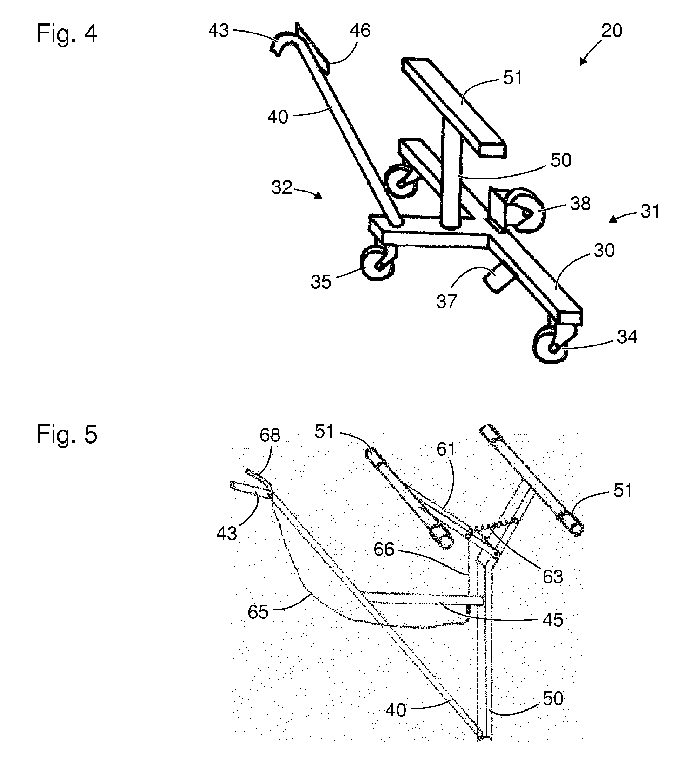

Figur 4 zeigt eine schematische axonometrische Darstellung einer weiteren Tischtransportvorrichtung 20, die in einigen Merkmalen, Eigenschaften und Funktionen der anhand der Figuren 1 bis 3 dargestellten Tischtransportvorrichtung ähnelt. Nachfolgend sind insbesondere Merkmale, Eigenschaften und Funktionen der in Figur 4 gezeigten Tischtransportvorrichtung 20 beschrieben, in denen diese sich von der anhand der Figuren 1 bis 3 dargestellten unterscheidet.

Die in Figur 4 gezeigte Tischtransportvorrichtung 20 unterscheidet sich von der anhand der Figuren 1 bis 3 dargestellten Tischtransportvorrichtung unter anderem dadurch, dass der Grundträger oder das Grundelement 30 T-förmig und aus Rohren oder Profilen gebildet ist. An der Vorderseite 31 des Grundträgers 30 sind zwei Lenkrollen 34 an den Enden des Schenkels, der dem waagerechten Strich eines Buchstabens 'T' entspricht angeordnet. An der Rückseite 32 des Grundträgers 30 ist eine Lenkrolle 35 an dem Ende des Schenkels, der dem senkrechten Strich eines Buchstabens 'T' entspricht angeordnet.

Ferner ist an dem Grundträger 30 eine Stützrolle 38 angeordnet, die bei der in Figur gezeigten Standposition der Tischtransportvorrichtung 20 keinen Kontakt zu einem Fußboden, auf dem die Tischtransportvorrichtung 20 steht oder rollt, hat. Ähnlich wie anhand der Figuren 1 und 2 dargestellt, kann die in Figur 4 gezeigte Tischtransportvorrichtung 20 so weit zur Vorderseite 31 und damit über die Lenkrollen 34 geneigt werden, dass sie - insbesondere in einem stabilen Gleichgewicht - nur auf den Lenkrollen 34 und der Stützrolle 38 an der Vorderseite 31 der Tischtransportvorrichtung 20 ruht.

Die in Figur 4 gezeigte Tischtransportvorrichtung 20 unterscheidet sich von der anhand der Figuren 1 bis 3 dargestellten Tischtransportvorrichtung ferner durch ein Trittelement 37. Das Trittelement 37 ist bei dem dargestellten Beispiel unmittelbar an dem Grundträger 30 angeordnet. Zum Aufrichten der Tischtransportvorrichtung 20 aus einer geneigten Position (vgl. Figur 2) in eine Standposition (vgl. Figur 3) kann ein Fuß auf das Trittelement gesetzt und mit diesem der Grundträger 30 unter den Tisch geschoben werden, so dass die Tischtransportvorrichtung 20 unter dem Tisch aufgerichtet wird.

Bei dem dargestellten Beispiel umfasst das Trittelement 37 eine beispielsweise aus Blech gebildete Platte, die geneigt an dem Grundträger 30 befestigt ist. Das Trittelement 37 kann einen rutschhemmenden Belag aus Gummi oder einem anderen Material mit hoher Haftreibung und/oder profilierter Oberfläche aufweisen. Alternativ und abweichend von der Darstellung in Figur 4 kann das Trittelement 37 durch einen Bereich des Grundträgers 30 selbst gebildet oder in den Grundträger 30 integriert sein.

Die in Figur 4 gezeigte Tischtransportvorrichtung 20 unterscheidet sich von der anhand der Figuren 1 bis 3 dargestellten Tischtransportvorrichtung ferner dadurch, dass ein einziges, jedoch flächiges Tischträgerelement 51 vorgesehen ist. Das Tischträgerelement 51 kann aus einem rutschsicheren oder -hemmenden Material gebildet sein oder eine Beschichtung oder Auflage aus einem solchen Material aufweisen.

Bei dem dargestellten Beispiel ist das Tischträgerelement 51 rechteckig und am oberen Ende einer vertikalen Trägerstütze 50 angeordnet. Alternativ kann das Tischträgerelement 51 eine andere Gestalt aufweisen, beispielsweise eine hufeisenförmige oder bogenförmige. Alternativ können ähnlich wie bei der anhand der Figuren 1 bis 3 dargestellten Tischtransportvorrichtung mehrere Tischträgerelemente vorgesehen sein.

Ein flächiges, insbesondere rechteckiges Tischträgerelement 51, wie es in Figur 4 gezeigt ist, kann auch bei der anhand der Figuren 1 bis 3 dargestellten Tischtransportvorrichtung vorgesehen sein.

Die in Figur 4 gezeigte Tischtransportvorrichtung 20 unterscheidet sich von der anhand der Figuren 1 bis 3 dargestellten Tischtransportvorrichtung ferner dadurch, dass an dem Steuerholm 40 ein Anschlag oder Begrenzungselement 46 vorgesehen ist. Das Begrenzungselement 46 ist so angeordnet, dass es beim Unterfahren eines zu transportierenden Tisches sich auf Höhe des Randes der Tischplatte befindet und dann an dem Rand der Tischplatte anliegt, wenn das Tischträgerelement 51 relativ zu der Tischplatte des zu transportierenden Tisches seine für den Transport des Tisches vorgesehene Position nahe der Mitte der Tischplatte erreicht hat.

Das Begrenzungselement 46 ist beispielsweise plattenförmig und kann aus einem weichen Material gebildet oder mit einem weichen Material belegt sein, um Schäden an einem transportierten Tisch zu vermeiden.

Ein Begrenzungselement 46 kann auch bei einer Tischtransportvorrichtung, wie sie anhand der Figuren 1 bis 3 dargestellt ist, vorgesehen sein.

Figur 5 zeigt eine schematische axonometrische Darstellung eines Teils einer weiteren Tischtransportvorrichtung, die in einigen Merkmalen, Eigenschaften und Funktionen einer der anhand der Figuren 1 bis 4 dargestellten Tischtransportvorrichtungen ähneln kann. Nachfolgend sind insbesondere Merkmale, Eigenschaften und Funktionen der Tischtransportvorrichtung, deren Teil in Figur 5 gezeigt ist, beschrieben, in denen diese sich von den anhand der Figuren 1 bis 4 dargestellten unterscheidet.

In Figur 5 sind der Steuerholm 40 und die Trägerstütze 50 einer Tischtransportvorrichtung gezeigt, deren Grundträger und Lenkrollen ähnlich wie bei den anhand der Figuren 1 bis 4 dargestellten Tischtransportvorrichtungen ausgebildet und angeordnet sein können.

Die Tischtransportvorrichtung, die in Figur 5 teilweise gezeigt ist, unterscheidet sich von den anhand der Figuren 1 bis 4 dargestellten Tischtransportvorrichtungen insbesondere dadurch, dass eine Verbindungsstrebe 45 zwischen dem Steuerholm 40 und der Trägerstütze 50 vorgesehen ist.

Die Tischtransportvorrichtung, die in Figur 5 teilweise gezeigt ist, unterscheidet sich von den anhand der Figuren 1 bis 4 dargestellten Tischtransportvorrichtungen ferner dadurch, dass nur zwei von insgesamt vier Tischträgerelementen 51 über einen Querträger mit dem oberen Ende der Trägerstütze 50 starr verbunden sind. Zwei weitere Tischträgerelemente sind an Enden eines schwenkbaren T-förmigen Hebels 61 vorgesehen. Durch die Schwenkbarkeit des T-förmigen Hebels 61 bilden die Tischträgerelemente 51 die Ecken eines Rechtecks oder Parallelogramms mit veränderbarer Höhe.

Zwischen der Trägerstütze 50 und dem schwenkbaren T-förmigen Hebel 61 ist eine Feder 63 vorgesehen, die den schwenkbaren Hebel 61 in eine vorbestimmte Ruhelage bewegt, bei dem dargestellten Beispiel zu der Trägerstütze 50 hin zieht. Ferner ist eine Bowdenzug 65, 66 vorgesehen, der den schwenkbaren Hebel 61 mit einem Steuerhebel 68 an dem Handgriff 43 an dem Steuerholm 40 verbindet. Der Steuerhebel 68 kann die Gestalt eines Bremsgriffs oder Bremshebels an einem Fahrrad aufweisen.

Die Bowdenzughülle 65 ist (bei dem dargestellten Beispiel: über die Verbindungsstrebe) so mit der Trägestütze verbunden und die Bowdenzugseele 66 ist so mit dem schwenkbaren Hebel 61 verbunden, dass eine Bewegung des Steuerhebels 68 mit einer Schwenkbewegung des schwenkbaren T-förmigen Hebels 61 einher geht. Insbesondere wird der schwenkbare Hebel 61 von der Trägerstütze 50 weg geschwenkt, wenn die Bowdenzugseele 66 eine Zugkraft überträgt.

Der veränderbare Abstand der Tischträgerelemente 51 kann das Be- und Entladen der Tischtransportvorrichtung vereinfachen. Insbesondere kann der schwenkbare Hebel 61 während des Unterfahrens eines Tisches (vgl. Figur 2) und beim Aufrichten der Tischtransportvorrichtung unter dem Tisch (vgl. Figur 3) nahe bei der Trägerstütze angeordnet sein, um beide Vorgänge zu vereinfachen. Sobald nach dem Aufrichten der Tischtransportvorrichtung unter der Tischplatte die Unterseite der Tischplatte auf den Tischträgerelementen 51 ruht, können der T-förmige Hebel von der Trägerstütze weg geschwenkt und damit das von den Tischträgerelementen 51 aufgespannte Viereck vergrößert werden, um eine stabilere Gleichgewichtslage des Tisches auf der Tischtransportvorrichtung zu bewirken.

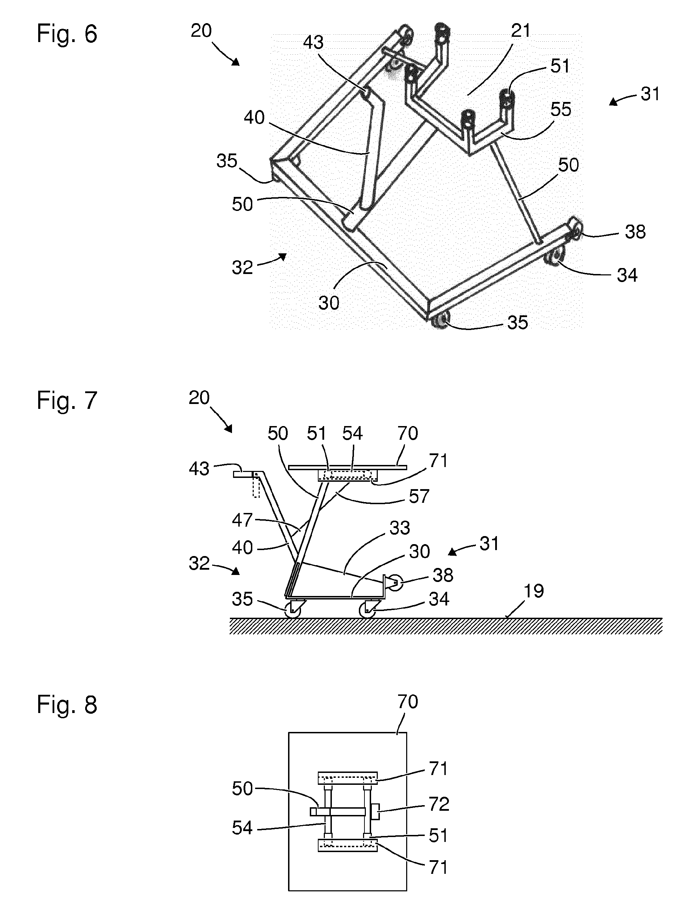

Figur 6 zeigt eine schematische axonometrische Darstellung einer weiteren Tischtransportvorrichtung 20, die in einigen Merkmalen, Eigenschaften und Funktionen den anhand der Figuren 1 bis 5 dargestellten Tischtransportvorrichtungen ähnelt. Nachfolgend sind insbesondere Merkmale, Eigenschaften und Funktionen der in Figur 6 gezeigten Tischtransportvorrichtung 20 beschrieben, in denen diese sich von den anhand der Figuren 1 bis 5 dargestellten unterscheidet.

Die in Figur 6 gezeigte Tischtransportvorrichtung 20 unterscheidet sich von den anhand der Figuren 1 bis 5 dargestellten Tischtransportvorrichtungen insbesondere dadurch, dass sie einen im Wesentlichen U-förmigen Grundriss aufweist, der eine zur Vorderseite 31 hin sich öffnende Nische 21 teilweise umschließt. Der Grundträger 30 weist im Wesentlichen die Gestalt eines Buchstaben 'U' auf, wobei die Öffnung zur Vorderseite 31 hin zeigt. Die Tischträgerelemente 51 sind an einer Tragstruktur 55 angeordnet, die ebenfalls im Wesentlichen die Gestalt eines Buchstaben 'U' aufweist und zur Vorderseite 31 hin offen ist. Die U-förmige Tragstruktur 55 ist durch mehrere Trägerstützen 50 mit dem U-förmigen Grundträger 30 verbunden und auf diesem abgestützt.

Alternativ und abweichend von der Darstellung in Figur 6 kann anstelle mehrer Tischträgerelemente 51 an einer U-förmigen Tragstruktur 55 ein einziges Tischträgerelement 51 in Gestalt eines liegenden - d. h. zum Fußboden 19 parallelen - Buchstabens 'U' vorgesehen sein.

Der im Wesentlichen U-förmige Grundriss der Tischtransportvorrichtung 20 kann einen Transport eines Tisches mit einem zentralen Stempelfuß ermöglichen. Während des Transports ist der Stempelfuß des Tisches in der von der Tischtransportvorrichtung 20 umgebenen Nische 21 angeordnet.

Figur 7 zeigt eine schematische Darstellung einer weiteren Tischtransportvorrichtung 20, die in einigen Merkmalen, Eigenschaften und Funktionen den anhand der Figuren 1 bis 6 dargestellten Tischtransportvorrichtungen ähnelt. Nachfolgend sind insbesondere Merkmale, Eigenschaften und Funktionen der in Figur 7 gezeigten Tischtransportvorrichtung 20 beschrieben, in denen diese sich von den anhand der Figuren 1 bis 6 dargestellten unterscheidet.

Die in Figur 7 gezeigte Tischtransportvorrichtung 20 ähnelt insbesondere der anhand der Figuren 1 bis 3 dargestellten Tischtransportvorrichtungen und unterscheidet sich von dieser insbesondere dadurch, dass zwischen dem Steuerholm 40 und der Trägerstütze 50 ein Versteifungsblech 47 und zwischen der Trägerstütze 50 und der H-förmigen Tragstruktur 54 ein Versteifungsblech 57 vorgesehen sind. Bei dem dargestellten Beispiel sind die Versteifungsbleche 47, 57 jeweils dreieckig.

Ähnliche Versteifungsbleche 47, 57 können auch bei den anderen hier dargestellten Tischtransportvorrichtungen vorgesehen sein.

Die in Figur 7 gezeigte Tischtransportvorrichtung 20 unterscheidet sich von der anhand der Figuren 1 bis 3 dargestellten Tischtransportvorrichtung ferner dadurch, dass der Handgriff 43 schwenkbar ist. Bei dem dargestellten Beispiel ist der Handgriff 43 um eine Schwenkachse orthogonal zu der Zeichenebene der Figur 7 nach unten in eine in gestichelten Linien angedeutete Position schwenkbar. Zur Entriegelung muss der Handgriff 43 insbesondere gegen die Kraft einer Feder in seiner Längsrichtung von dem oberen Ende des Steuerholms 40 weggezogen werden und kann dann um eine Schwenkachse orthogonal zu dem Steuerholm 40 und zu dem Handgriff 43 nach unten geschwenkt werden.

Alternativ oder zusätzlich kann der Handgriff 43 nach oben schwenkbar sein. Alternativ und abweichend von der Darstellung in Figur 7 kann der Handgriff 43 um eine Schwenkachse, die nicht orthogonal zu der Zeichenebene der Figur 7 ist, schwenkbar oder klappbar oder ein- und ausfahrbar oder teleskopierbar sein.

Ein schwenk- oder klappbarer oder ein- und ausfahrbarer oder teleskopierbarer oder in anderer Weise bewegbarer Handgriff 43 kann die Gesamtbreite einer Anordnung aus Tischtransportvorrichtung 20 und Tisch verringern und das Durchqueren einer Türzarge oder einer anderen Engstelle vereinfachen.

Ein schwenkbarer oder auf andere Weise bewegbarer Handgriff kann auch bei den anhand der Figuren 1 bis 6 dargestellten Tischtransportvorrichtungen vorgesehen sein.

Die in Figur 7 gezeigte Tischtransportvorrichtung 20 unterscheidet sich von der anhand der Figuren 1 bis 3 dargestellten Tischtransportvorrichtung ferner dadurch, dass ein Tablett oder ein anderes Ablageelement 70 an den Tischträgerelementen 51 befestigt ist. Auf dem Ablageelement 70 können Gegenstände abgelegt und/oder transportiert werden.

Das Ablageelement ist abnehmbar. Bei dem dargestellten Beispiel sind an der Unterseite des Ablageelements 70 zwei Schienen 71 mit jeweils L-förmigem (alternativ: U-förmigem) Querschnitt angeordnet. Jede Schiene 71 umgreift zwei Tischträgerelemente 51, so dass das Ablageelement 70 nicht von den Tischträgerelemente 51 abgehoben werden oder kippen kann.

Figur 8 zeigt eine schematische Darstellung einer Untersicht der H-förmigen Tragstruktur 54 mit den Tischträgerelementen 51 und des Ablageelements 70 der Tischtransportvorrichtung 20 aus Figur 7. In gestrichelten Linien sind die unsichtbaren inneren Konturen der L-förmigen Schienen 71 und die Konturen der durch die L-förmigen Schienen 71 verdeckten Bereich der Tischträgerelemente 51 angedeutet. Ferner ist in Figur 8 ein Anschlag 72 erkennbar, der bei korrekter Positionierung des Ablageelements 70 an der H-förmigen Tragstruktur 54 anliegt.

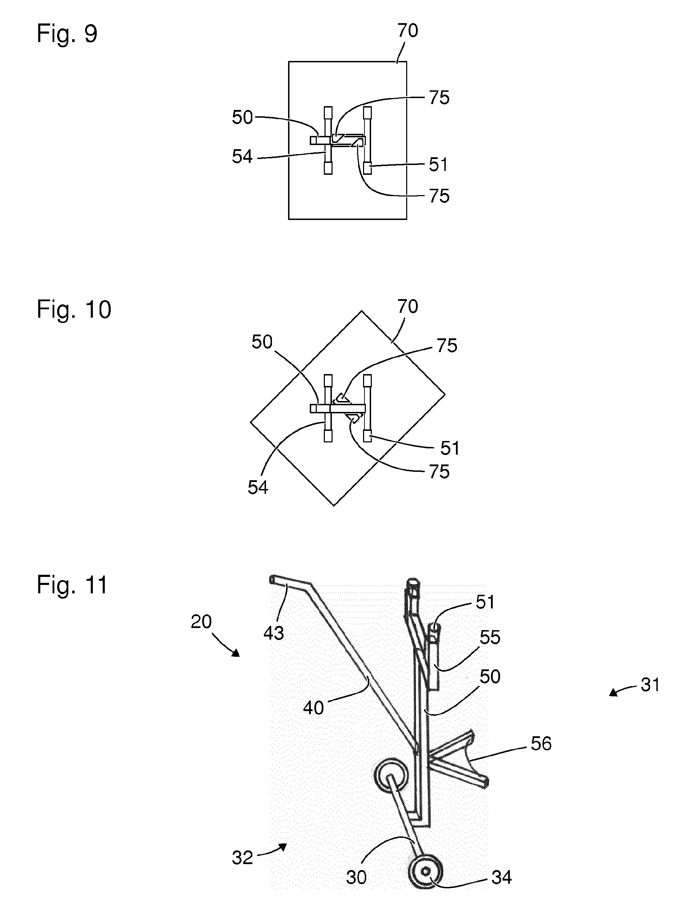

Figur 9 zeigt eine schematische Darstellung einer Untersicht der H-förmigen Tragstruktur 54 einer Tischtransportvorrichtung und einer alternativen Ausgestaltung des Ablageelements 70. Das in Figur 9 gezeigte Ablageelement 70 unterscheidet sich von dem anhand der Figuren 7 und 8 dargestellten Ablageelement dadurch, dass anstelle zweier Schienen 71, die die Tischträgerelemente 51 umgreifen, zwei Haken 75 an der Unterseite des Ablageelements 70 vorgesehen sind. Die beiden Haken 75 umgreifen den mittleren Abschnitt der H-förmigen Tragstruktur 54 nahe dessen Enden von entgegengesetzten Seiten. Das Ablageelement 70 kann deshalb mit einer Drehbewegung mit der H-förmigen Tragstruktur 54 und somit mit der gesamten Tischtransportvorrichtung verbunden und durch eine entgegengesetzte Drehbewegung von dieser getrennt werden.

Figur 10 zeigt eine weitere schematische Darstellung einer Untersicht der H-förmigen Tragstruktur 54 einer Tischtransportvorrichtung und des Ablageelements 70 aus Figur 9. In Figur 10 ist eine Situation dargestellt, die sich von der anhand der Figur 9 dargestellten dadurch unterscheidet, dass das Ablageelement relativ zu der H-förmigen Tragstruktur gedreht ist, und zwar von der Oberseite aus betrachtet gegen den Uhrzeigersinn. Bei der in Figur 10 gezeigten Situation umgreifen die Haken 75 nicht mehr den mittleren Abschnitt der H-förmigen Tragstruktur 54, die Verbindung zwischen dem Ablageelement 70 und der H-förmigen Tragstruktur 54 ist gelöst, und das Ablageelement 70 kann von der H-förmigen Tragstruktur 54 abgehoben werden.

Ein Ablageelement 70, wie es anhand der Figuren 7 bis 10 dargestellt ist, kann auch bei den anhand der Figuren 1 bis 6 dargestellten Tischtransportvorrichtungen vorgesehen sein.

Figur 11 zeigt eine schematische axonometrische Darstellung einer weiteren Tischtransportvorrichtung 20, die in einigen Merkmalen, Eigenschaften und Funktionen den anhand der Figuren 1 bis 6 dargestellten Tischtransportvorrichtungen ähnelt. Nachfolgend sind insbesondere Merkmale, Eigenschaften und Funktionen der in Figur 11 gezeigten Tischtransportvorrichtung 20 beschrieben, in denen diese sich von den anhand der Figuren 1 bis 7 dargestellten Tischtransportvorrichtungen unterscheidet.

Die in Figur 11 gezeigte Tischtransportvorrichtung 20 weist lediglich zwei Räder 34 auf, die an einem Querträger als Grundträger 30 befestigt sind. Beide Räder 34 sind um die gleiche Achse rotierbar. Das untere Ende einer Trägerstütze 50 ist mit dem Grundträger 30 verbunden. Am oberen Ende der Trägerstütze 50 sind mehrere, insbesondere zwei Tischträgerelemente 51 an einer U-förmigen Tragstruktur 55 vorgesehen.

Ferner umfasst die Tischtransportvorrichtung 20 eine Stempelfußstütze 56, die bei dem dargestellten Beispiel direkt mit der Trägerstütze 50 verbunden ist und ein Band oder ein Seil oder ein anderes elastisches Element umfasst. Jedes Ende des Bands oder Seils oder anderen elastischen Elements ist mit einem Ende von einem von insgesamt zwei in der Standposition der Tischtransportvorrichtung 20 im Wesentlichen horizontalen Streben gespannt.

Zum Transport eines Tisches mit Stempelfuß, beispielsweise eines Stehtisches, wird die Tischtransportvorrichtung 20 nach vorn geneigt bis die Höhe der Tischträgerelemente 51 niedriger als die Höhe der Unterseite der Tischplatte des zu transportierenden Tisches ist. Danach wird die Tischtransportvorrichtung 20 geneigt unter die Tischplatte des zu transportierenden Tisches bewegt und dann wieder aufgerichtet. Dabei werden die Tischträgerelemente 51 so weit angehoben, dass sie an der Unterseite der Tischplatte anliegen und die Tischplatte und den gesamten Tisch anheben.

Während des Aufrichtens der Tischtransportvorrichtung unter dem Tisch nähert die Stempelfußstütze sich an den Stempelfuß des Tisches an. Während des Transports des Tisches liegt der Stempelfuß des Tisches an der Stempelfußstütze an und wird so vor Beschädigung durch Berührung mit anderen Teilen der Tischtransportvorrichtung geschützt.

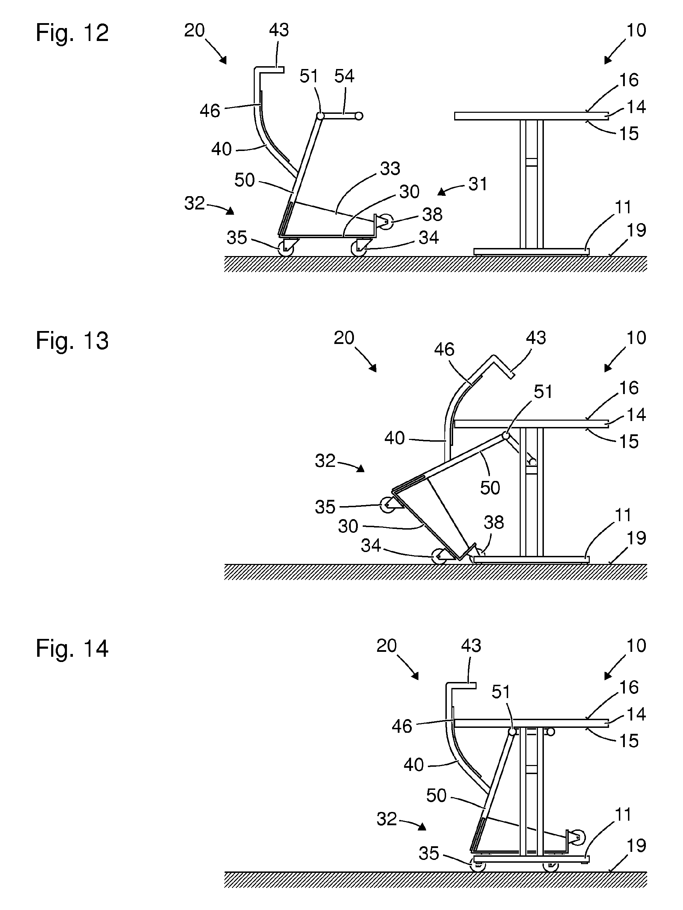

Figur 12 zeigt eine schematische Darstellung eines Tisches 10 und einer weiteren Tischtransportvorrichtung 20, die in einigen Merkmalen, Eigenschaften und Funktionen den anhand der Figuren 1 bis 11 dargestellten Tischtransportvorrichtungen ähnelt. Nachfolgend sind insbesondere Merkmale, Eigenschaften und Funktionen der in Figur 12 gezeigten Tischtransportvorrichtung 20 beschrieben, in denen diese sich von den anhand der Figuren 1 bis 11 dargestellten unterscheidet.

Die in Figur 12 gezeigte Tischtransportvorrichtung 20 ähnelt insbesondere den anhand der Figuren 1 bis 3 und 7 dargestellten Tischtransportvorrichtungen und unterscheidet sich von diesen insbesondere dadurch, dass der Steuerholm 40 einen kreisbogenförmig gekrümmten Abschnitt aufweist. Der Krümmungsmittelpunkt des kreisbogenförmig gekrümmten Abschnitts des Steuerholms 40 ist insbesondere an oder nahe der Verbindungsgerade durch diejenigen beiden Tischträgerelemente 51, die näher zu der Rückseite 32 hin angeordnet sind.

Die in Figur 12 gezeigte Tischtransportvorrichtung 20 unterscheidet sich von den anhand der Figuren 1 bis 3 und 7 dargestellten Tischtransportvorrichtungen ferner dadurch, dass an dem Steuerholm 40 ein Anschlag oder ein Begrenzungselement 46 vorgesehen ist. Das Begrenzungselement 46 weist insbesondere ein elastisches Material und/oder eine glatte und/oder gleitfähige Oberfläche auf, um bei Berührung mit einem Rand einer Tischplatte 14 keine Schäden zu erzeugen.

Das Begrenzungselement 46 ist optional und kann bei der in Figur 12 gezeigten Tischtransportvorrichtung 20 entfallen, insbesondere wenn der Steuerholm 40 selbst eine elastische und/oder glatte Oberfläche aufweist.

Ein Begrenzungselement 46, wie es anhand der Figur 12 dargestellt ist, kann auch bei Tischtransportvorrichtungen vorgesehen sein, wie sie anhand der Figuren 1 bis 11 dargestellt sind.

Die in Figur 12 gezeigte Tischtransportvorrichtung 20 unterscheidet sich von den anhand der Figuren 1 bis 3 und 7 dargestellten Tischtransportvorrichtungen ferner dadurch, dass der Handgriff 43 am oberen Ende des Steuerholms 40 nicht zu der Rückseite 32 und damit zu einem Benutzer hin und von einem zu transportierenden Tisch weg, sondern zu der Vorderseite 31 und damit von einem Benutzer weg und zu einem zu transportierenden Tisch hin orientiert ist.

Alternativ und abweichend von der Darstellung in Figur 12 kann der Handgriff 43 - ähnlich wie bei den anhand der Figuren 1 bis 11 dargestellten Tischtransportvorrichtungen - zu der Rückseite 32 hin orientiert und/oder - ähnlich wie bei der anhand der Figur 7 dargestellten Tischtransportvorrichtung - klapp- oder schwenkbar ausgebildet sein.

Figur 13 zeigt eine weitere schematische Darstellung des Tisches 10 und der Tischtransportvorrichtung 20 aus den Figuren 12 und 13. Die Art der Darstellung in Figur 13, insbesondere die Zeichenebene der Figur 13, entspricht derjenigen der Figur 12.

In Figur 13 ist eine Situation oder Konfiguration gezeigt, die sich von der anhand der Figur 12 dargestellten Situation unterscheidet und der anhand der Figur 2 dargestellten Situation ähnelt. Die Tischtransportvorrichtung 20 befindet sich in einer geneigten Position, so dass die Lenkrollen 34 an der Vorderseite 31 und die Stützrolle 38 auf dem Fußboden 19 aufliegt. Ferner ist die Tischtransportvorrichtung 20 zu dem Tisch 10 hin bewegt. Dabei unterfährt die H-förmige Tragstruktur 54 an dem oberen Ende der Trägerstütze 50 mit den Tischträgerelementen 51 die Tischplatte 14 des Tisches 10.

Die in Figur 13 gezeigte Situation ist dadurch gekennzeichnet, dass das Begrenzungselement 46 an dem Steuerholm 40 der Tischtransportvorrichtung 20 an dem Rand der Tischlatte 14 anliegt. Das Begrenzungselement definiert somit formschlüssig eine vorbestimmte Position der Tischtransportvorrichtung 20 unter dem Tisch, bei der die Tischträgerelemente 51 an der H-förmigen Tragstruktur 54 an dem oberen Ende der Trägerstütze 50 bereits nahe der Mitte der Tischplatte 14 angeordnet sind.

Figur 14 zeigt eine weitere schematische Darstellung des Tisches 10 und der Tischtransportvorrichtung 20 aus den Figuren 12 und 13. Die Art der Darstellung in Figur 14, insbesondere die Zeichenebene der Figur 14, entspricht denjenigen der Figuren 12 und 13.

In Figur 14 ist eine weitere Situation oder Konfiguration gezeigt, die sich von den anhand der Figuren 12 und 13 dargestellten Situationen unterscheidet und der anhand der Figur 3 dargestellten Situation ähnelt. Die in Figur 14 gezeigte Situation entsteht, indem ausgehend von der anhand der Figur 13 dargestellten Situation die Tischtransportvorrichtung 20 unter dem Tisch 10 wieder aufgerichtet wird, und zwar bis zu der bereits in Figur 12 dargestellten Standposition. Da die Höhe der Tischträgerelemente 51 über dem Fußboden 19, auf dem die Tischtransportvorrichtung 20 steht, größer als die Höhe der Unterseite 15 der Tischplatte 14 über dem Fußboden 19 ist, ruht die Unterseite 15 der Tischplatte 14 auf den Tischträgerelementen 51, und die Tischbeine 11 des Tisches 10 berühren nicht mehr den Fußboden 19. Der Tisch 10 kann deshalb zusammen mit der Tischtransportvorrichtung 20 bewegt werden.

Die abschnittsweise kreisbogenförmige Gestalt des Steuerholms 40 und des Begrenzungselements 46 und der Krümmungsmittelpunkt nahe der Verbindungsgeraden derjenigen beiden Tischträgerelemente 51, die näher bei der Rückseite 32 angeordnet sind und zuerst in Kontakt mit der Unterseite 15 der Tischplatte 14 sind (vgl. Figur 13), bewirkt, dass während des Aufrichtens der Tischtransportvorrichtung 20 unter der Tischplatte 14 der Rand der Tischplatte 14 durch das Begrenzungselement 4 geführt wird, insbesondere an dem Begrenzungselement 4 entlang gleitet oder sich nahem dem Begrenzungselement 4 bewegt.

Ferner bewirkt die kreisbogenförmige Gestalt des Steuerholms 40, dass das obere Ende des Steuerholm und der gesamte Steuerholm nur minimal - im Optimalfall nur um die Dicke des Steuerholm - gegenüber dem Rand der Tischplatte 14 übersteht. Da der Handgriff 43 zu der Vorderseite 31 hin orientiert ist, ist er bei der in Figur 14 gezeigten Situation über der Tischplatte 14 angeordnet. Er steht deshalb nicht über. Insgesamt steht die Tischtransportvorrichtung 20 deshalb nur minimal gegenüber dem Rand der Tischplatte 14 über. Dies kann einen Transport des Tisches (in einer Bewegungsrichtung orthogonal zu der Zeichenebene der Figur 14) bei beengten Platzverhältnissen, insbesondere durch eine Tür hindurch, vereinfachen.

### Bezugszeichenliste:

- 10: Tisch
- 11: Tischbein des Tisches 10
- 14: Tischplatte des Tisches 10
- 15: Unterseite der Tischplatte 14 des Tisches 10
- 16: Oberseite der Tischplatte 14 des Tisches 10
- 19: Fußboden
- 20: Tischtransportvorrichtung
- 21: von der Tischtransportvorrichtung 20 U-förmig umgebene Nische der Tischtransportvorrichtung 20
- 30: Grundträger oder Grundelement der Tischtransportvorrichtung 20
- 31: Vorderseite des Grundträgers 30 und der Tischtransportvorrichtung 20
- 32: Rückseite des Grundträgers 30 und der Tischtransportvorrichtung 20
- 33: Versteifungsblech des Grundträgers 30
- 34: Rad an der Vorderseite 31 des Grundträgers 30, insb. um 360 Grad schwenkbare Lenkrolle
- 35: Rad an der Rückseite 32 des Grundträgers 30, insb. um 360 Grad schwenkbare Lenkrolle
- 37: Trittelement als Fußstütze an dem Grundträger 30
- 38: Stützrolle an dem Grundträger 30
- 40: Steuerholm der Tischtransportvorrichtung 10
- 43: Handgriff an dem Steuerholm 40 der Tischtransportvorrichtung 10
- 45: Verbindungsstrebe zwischen Steuerholm 40 und Trägerstütze 50
- 46: Anschlag oder Begrenzungselement an dem Steuerholm 40
- 47: Versteifungsblech zwischen Steuerholm 40 und Trägerstütze 50
- 50: Trägerstütze der Tischtransportvorrichtung 10
- 51: Tischträgerelement an der Trägerstütze 50
- 54: H-förmige Tragstruktur für mehrere Tischträgerelemente 51
- 55: U-förmige Tragstruktur für mehrere Tischträgerelemente 51
- 56: Stempelfußstütze der Tischtransportvorrichtung 20
- 57: Versteifungsblech zwischen Trägerstütze 50 und H-förmiger Tragstruktur 54
- 61: schwenkbarer T-förmiger Hebel an der Trägerstütze 50
- 63: Feder zwischen der Trägestütze 50 und dem schwenkbaren T-förmigen Hebel 61
- 65: Bowdenzughülle
- 66: Bowdenzugseele
- 68: Steuerhebel
- 70: Ablageelement
- 71: Schiene mit L- oder U-förmigem Profil an der Unterseite des Ablageelements 70
- 72: Anschlag an der Unterseite des Ablageelements 70
- 75: Haken an dem Ablageelement 70

## Patentansprüche

1. **Tischtransportvorrichtung** (10) zum Transport eines Tisches (10), mit:
mehreren **Rollen** (34, 35);
einem **Tischträgerelement** (51) zum **Unterfahren** des zu transportierenden Tisches (10),
wobei die Tischtransportvorrichtung (20) ausgebildet ist, um zum Unterfahren des zu transportierenden Tisches (10) mittels des Tischträgerelements (51) aus einer **Standposition** einseitig angehoben und nach vorne geneigt zu werden und beim Aufrichten unter dem zu transportierenden Tisch (10) den zu transportierenden Tisch (10) vom Fußboden (19) abzuheben.

2. Tischtransportvorrichtung (20) nach dem vorangehenden Anspruch, bei der eine der Rollen (34, 35) der Tischtransportvorrichtung (20) eine **Lenkrolle** ist.

3. Tischtransportvorrichtung (20) nach einem der vorangehenden Ansprüche, ferner mit:
einem **Handgriff** (43).

4. Tischtransportvorrichtung (20) nach dem vorangehenden Anspruch, wobei der **Handgriff** (43) **schwenkbar** und/oder **klappbar** und/oder **ausfahrbar** ausgebildet oder so angeordnet ist, dass er beim Transport eines Tisches (10) über der Tischplatte (14) des Tisches (10) angeordnet ist.

5. Tischtransportvorrichtung (20) nach einem der Ansprüche 3, 4, ferner mit:
einem gekrümmten Steuerholm (40), an dem der Handgriff (43) angeordnet ist.

6. Tischtransportvorrichtung (20) nach einem der Ansprüche 1 und 2, wobei die Tischtransportvorrichtung (20) **keinen Handgriff** (43) aufweist.

7. Tischtransportvorrichtung (20) nach einem der vorangehenden Ansprüche, wobei das Tischträgerelement (51) vorgesehen und ausgebildet ist, um den Tisch (10) auf dem Tischträgerelement (51) im **Gleichgewicht** zu tragen.

8. Tischtransportvorrichtung (20) nach einem der vorangehenden Ansprüche, ferner mit
einem **Begrenzungselement** (46).

9. Tischtransportvorrichtung (20) nach dem vorangehenden Anspruchin Rückbezug auf einen der Ansprüche 3, 4, bei der das Begrenzungselement (46) an dem Handgriff (43) vorgesehen ist oder der Handgriff (43) oder ein Steuerholm (40), an dem der Handgriff (43) vorgesehen ist, zugleich auch als **Begrenzungselement** (46) vorgesehen ist.

10. Tischtransportvorrichtung (20) nach einem der vorangehenden Ansprüche, ferner mit:
einem **Trittelement** (37).

11. Tischtransportvorrichtung (20) nach einem der vorangehenden Ansprüche, ferner mit:
einer **Stützrolle** (38) zum Stützen der Tischtransportvorrichtung (20) in einer geneigten Position, die zum Unterfahren des zu transportierenden Tisches (10) geeignet ist.

12. Tischtransportvorrichtung (20) nach einem der vorangehenden Ansprüche, bei der die **Höhe** der Tischtransportvorrichtung (20), vom Fußboden (19) bis zu der Oberkante des Tischträgerelements (51) **veränderbar** ist.

13. Tischtransportvorrichtung (20) nach einem der vorangehenden Ansprüche, ferner mit:
einem **Ablageelement** (70) an dem Tischträgerelement (51).

14. Tischtransportvorrichtung (20) nach einem der vorangehenden Ansprüche, wobei die Tischtransportvorrichtung (20) einen U-förmigen Grundriss mit einer Ausnehmung (21) zum Aufnehmen eines Stempelfußes eines zu transportierenden Tisches aufweist.

15. Tischtransportvorrichtung (20) nach einem der vorangehenden Ansprüche, bei der der Abstand zweier Tischträgerelemente veränderbar ist.
